# EUROPEAN PATENT APPLICATION

(11) **EP 2 602 719 A1**
(43) Date of publication of application: **12.06.2013**
(21) Application number: 11814347.8
(22) Date of filing: 26.04.2011
(51) Int. Cl.: G06F 12/00

(54) **CONTENT PLAYBACK DEVICE FOR SEQUENTIALLY PLAYING BACK MULTIPLE FILES**

(30) Priority: 06.08.2010 JP 2010177648
(71) Applicant: Sanyo Electric Co., Ltd., Osaka 570-8677 (JP)
(72) Inventor: SHIMIZU, Haruyuki, Moriguchi-shi Osaka 570-8677 (JP)
(74) Representative: Glawe, Delfs, Moll
(86) International application number: PCT/JP2011/060143
(87) International publication number: WO 2012/017716

(57) **Abstract**

A content reproduction apparatus (1) comprises: an accepting unit (70) which accepts specification of a file; and a control unit (10) which executes a process in accordance with the specification of the file accepted by the accepting unit (70). The control unit (10) detects identification information from a file name of the file whose specification is accepted by the accepting unit (70), and determines, based on the detected identification information, whether the file name of the specified file satisfies a predetermined condition and, in accordance with a result of the determination, specifies a file to be reproduced subsequently to the specified file.

## Description

### TECHNICAL FIELD

The present invention relates to a content reproduction apparatus, and particularly relates to a content reproduction apparatus sequentially reproducing a plurality of files.

### BACKGROUND ART

For apparatuses reproducing content files, a variety of technologies have so far been disclosed. In the case where a conventional common content reproduction apparatus is to be caused to reproduce content files such as image data or audio data, a user has to specify, for example, an order in which a plurality of files are to be reproduced, which sometimes makes the user feel troublesome.

In some conventional data reproduction apparatuses, each file name or directory name includes information about reproduction by which the order in which data are to be reproduced or the reproduction time is determined. When such a reproduction apparatus receives a request for successive reproduction or a memory card is inserted into the reproduction apparatus, the apparatus accesses the memory card to obtain a list of file names and a directory of image data included in the memory card and, based on reproduction control information included in a part of a character string indicating a file name and a directory name where the file is located, extracts files to be successively reproduced, and determines the number of times reproduction is to be repeated.

### SUMMARY OF INVENTION

### TECHNICAL PROBLEM

In the reproduction apparatus like the above-described one, however, files to be reproduced and the number of times reproduction is to be repeated are determined by the file name and the directory name. Therefore, in the case where a file to be reproduced is to be changed or the number of times reproduction is to be repeated is to be changed, there arises the need to change settings of the reproduction apparatus. Due to this, in order to give variations to the file reproduction pattern, a complicated operation is necessary.

The present invention has been made in view of the above-mentioned circumstances, and an object is to provide a content reproduction apparatus that is enabled to give variations to the file reproduction pattern without requiring a complicated operation.

### SOLUTION TO PROBLEM

A content reproduction apparatus according to the present invention reproduces a plurality of files recorded on a recording medium, and comprises: an accepting unit which accepts specification of a file; and a control unit which executes a process in accordance with the specification of the file accepted by the accepting unit. The control unit detects identification information from a file name of the file whose specification is accepted by the accepting unit, and determines, based on the detected identification information, whether the file name of the specified file satisfies a predetermined condition and, in accordance with a result of the determination, specifies a file to be reproduced subsequently to the specified file.

### ADVANTAGEOUS EFFECTS OF INVENTION

In accordance with the present invention, the content reproduction apparatus is enabled to give variations to the file reproduction pattern without requiring a complicated operation.

### BRIEF DESCRIPTION OF DRAWINGS

Fig. 1A is a diagram showing an external appearance of an embodiment of a content reproduction apparatus according to the present invention.
Fig. 1B is a diagram showing an external appearance of the embodiment of the content reproduction apparatus according to the present invention.
Fig. 1C is a diagram showing an external appearance of the embodiment of the content reproduction apparatus according to the present invention.
Fig. 1D is a diagram showing an external appearance of the embodiment of the content reproduction apparatus according to the present invention.
Fig. 2 is a diagram schematically showing a state in which the reproduction apparatus of Fig. 1 is used with a text.
Fig. 3 is a block diagram of the reproduction apparatus of Fig. 1.
Fig. 4 is a flowchart for a reproduction-once process performed by the reproduction apparatus of Fig. 1.
Fig. 5 is a diagram for illustrating the order in which files are reproduced in the reproduction-once process of Fig. 4.
Fig. 6 is a flowchart for a reproduction-three-times process performed by the reproduction apparatus of Fig. 1.
Fig. 7 is a flowchart for the reproduction-three-times process performed by the reproduction apparatus of Fig. 1.
Fig. 8 is a diagram for illustrating the order in which files are reproduced in the reproduction-three-times process of Figs. 6 and 7.
Fig. 9 is a diagram schematically showing an example of the contents of a text used in combination with the reproduction apparatus of Fig. 1.
Fig. 10 is a diagram schematically showing another example of the contents of a text used in combination with the reproduction apparatus of Fig. 1.
Fig. 11 is a diagram schematically showing still another example of the contents of a text used in combination with the reproduction apparatus of Fig. 1.
Fig. 12 is a diagram showing a modification of Fig. 3.

### DESCRIPTION OF EMBODIMENTS

An embodiment of the present invention will be described hereinafter with reference to the drawings. In the drawings, components having the same functions are denoted by the same reference characters, and a description thereof will not be repeated.

### [1. External Appearance of Reproduction Apparatus]

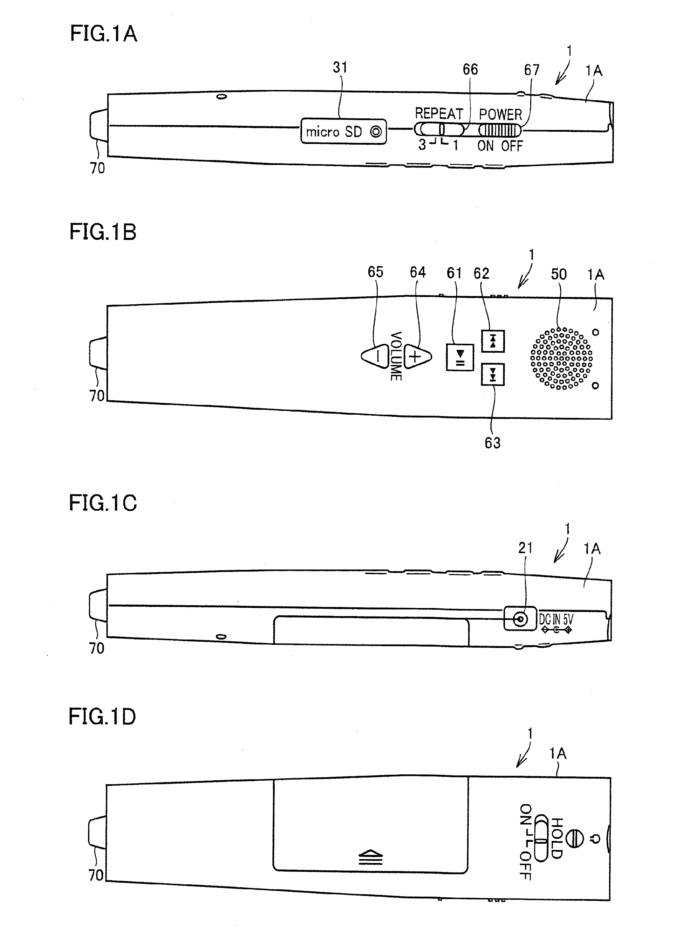

Figs. 1A to 1D are each a diagram showing an external appearance of a reproduction apparatus 1 according to an embodiment of the present invention. Fig. 1B is a top view of reproduction apparatus 1, Fig. 1A is a left side view thereof, Fig. 1C is a right side view thereof, and Fig. 1D is a bottom view thereof.

Reproduction apparatus 1 sequentially reproduces a plurality of files stored in this reproduction apparatus 1 or recorded on a recording medium removable from reproduction apparatus 1 (removable medium 100 described later herein). As a file is reproduced, a sound is output through a speaker 50.

Reproduction apparatus 1 has its leading end mounted with an image reading unit 70. Image reading unit 70 is configured for example by a CMOS (Complementary Metal Oxide Semiconductor) sensor.

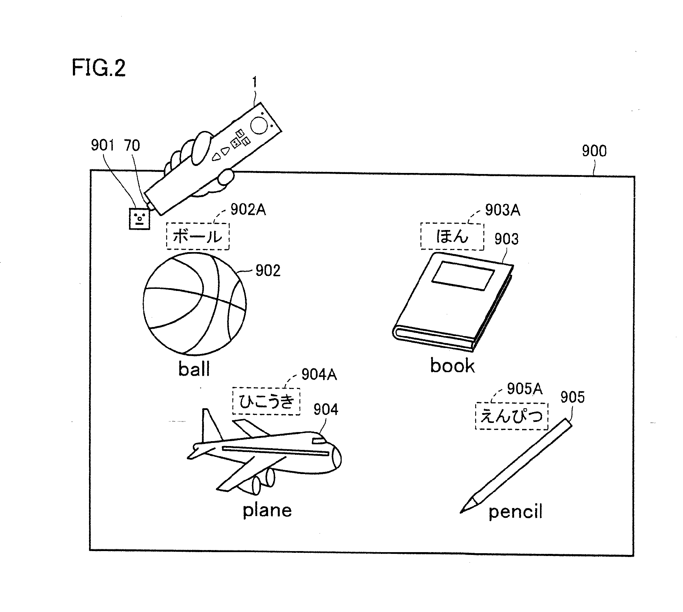

Reproduction apparatus 1 of the present embodiment is used for the sake of learning and used together with a text prepared for learning (textbook). In one specific example, reproduction apparatus 1 is used in such a manner as shown in Fig. 2 that image reading unit 70 is directed to face an image 901 printed on page 900 of the text to thereby read image 901. In reproduction apparatus 1, image recognition is performed on the read image, and the recognized image is converted to predetermined information. The predetermined information includes information which specifies a file. As a technology of converting the read image to information such as information specified by the file, a known technology may be used. For example, the technology utilizing the QR code (Quick Response code) may be used.

Reproduction apparatus 1 has its left side including a switch 67 for switching on/off a power supply, and a switch 66 for setting a reproduction mode (reproduction-once mode or reproduction-three-times mode) for a file as described later herein. In this left side, a slot 31 is disposed for inserting, into a body 1A of reproduction apparatus 1, a recording medium which is removable from body 1A.

Reproduction apparatus 1 has its upper side provided with a play button 61 for starting reproduction of a file, a fast-forward button 63 for changing a file to be reproduced to a subsequent file, a rewind button 62 for reproducing a preceding file, and volume buttons 64, 65 for adjusting the volume of sound which is output through speaker 50.

As shown particularly in Fig. 1C, reproduction apparatus 1 has its right side including a port 21 for inserting an AC (Alternating Current) adapter by which commercial electric power is externally supplied. A battery 20, which will be described later herein, is charged with the externally-supplied commercial electric power. Reproduction apparatus 1 also has its bottom provided with a switch 68 operated for causing reproduction apparatus 1 to enter a hold state, and a lid 69 for detachably housing, in body 1A, battery 20 (described later herein) to be housed in reproduction apparatus 1.

Fig. 2 shows an example page of a text prepared for learning. Referring to Fig. 2, an image 901 is printed on page 900, and in addition thereto, images 902 to 905 are printed. In reproduction apparatus 1, an image generated by shooting image 901 is recognized and the recognized image data is converted to information which specifies a file. By reproduction apparatus 1, the specified file is reproduced.

Above images 902 to 905 on page 900, character strings 902A to 905A indicating objects included in respective images in a first language (Japanese) are printed, respectively. Above these images, character strings indicating the objects included in respective images in a second language (English) are printed, respectively.

In page 900, there are included image 902 corresponding to a ball, image 903 corresponding to a book, image 904 corresponding to an airplane, and image 905 corresponding to a pencil. Image reading unit 70 of reproduction apparatus 1 can also be caused to touch (the specific location of) each of these images 902 to 905 to reproduce the associated file among files corresponding to images 902 to 905.

### [2. Block Configuration]

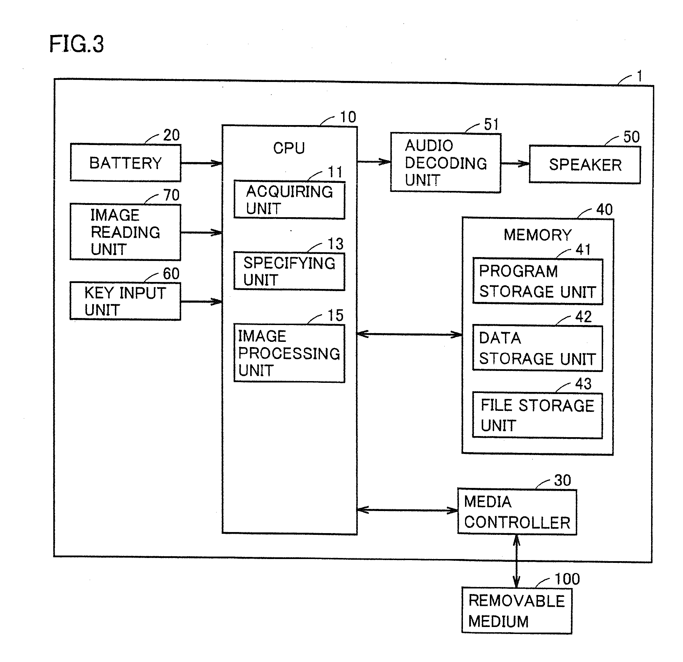

Fig. 3 is a block diagram of reproduction apparatus 1.

Referring to Fig. 3, reproduction apparatus 1 includes a CPU (Central Processing Unit) 10 for generally controlling the operation of reproduction apparatus 1. Reproduction apparatus 1 also includes a memory 40, speaker 50, battery 20, a media controller 30, and a key input unit 60.

Memory 40 includes, for example, a nonvolatile memory such as flash memory and a volatile memory such as SDRAM (Synchronous Dynamic Random Access Memory). Memory 40 has a program storage unit 41 which stores a program executed by CPU 10, a data storage unit 42 which stores data used by CPU 10 for executing a program, and a file storage unit 43 which stores files constituting contents. Speaker 50 is connected through an audio decoding unit 51 to CPU 10. Key input unit 60 includes switches 61 to 68 described above with reference to Fig. 1.

CPU 10 includes, as its functions, an acquiring unit 11, a specifying unit 13, and an image processing unit 15. These units may each be implemented by CPU 10 through execution of a program stored in program storage unit 41, or at least a part of them may be configured by dedicated circuits in the form of hardware.

CPU 10 reads data from and writes data on removable medium 100 through media controller 30. Files reproduced by reproduction apparatus 1 may be stored on removable medium 100 instead of file storage unit 43.

### [3. Content Data Structure]

In the present embodiment, an example of the content may be an audio file relevant to a textbook prepared for learning. According to the present embodiment, file storage unit 43 stores audio files as shown in the following Table 1.

**Table 1**

| teaching material folder | learning element folder | track element folder | audio file |
|---|---|---|---|
| 01 | 01 | 01 | 01B |
| | | | 02A |
| | | | 03A |
| | | | 04A |
| | | | 05C |
| | | | 06D |
| | 01 | 01 | 01B |
| | | | 02A |
| | | | 03A |
| | | | 04A |
| | | | 05A |
| | | | 06A |
| | | | 07C |
| | | | 08D |
| | | 02 | 01B |
| | | | 02A |
| | | | 03C |
| | | | 04D |

In file storage unit 43, the teaching material folder, the learning element folder, the track element folder, and the audio file are stored. In one track element folder, one or two or more audio files are stored. In one learning element folder, one or two or more track element folders are stored. In one teaching material folder, one or two or more learning element folders are stored. Namely, the hierarchical relationship between the teaching material folder, the learning element folder, the track element folder, and the audio file is the one as shown in Table 2.

**Table 2**

| | meaning and number of folders/files | notation rule |
|---|---|---|
| teaching material folder | folder for each teaching material | 01_xxx to 99_xxx (number represented by first two digits: 01 to 99) |
| learning element folder | folder for each element for learning | 01_xxx to 99_xxx (number represented by first two digits: 01 to 99) |
| track element folder | folder for each track | 01_xxx to 99_xxx (number represented by first two digits: 01 to 99) |
| audio file | file name | 01B_setumei, 02A_honbun, 06C_setumei_end, 04D_tanpatu (number represented by first two digits: 01 to 99) (third digit: type of reproduced file) |

Table 2 shows, for each of the teaching material folder, the learning element folder, the track element folder, and the audio file, what the folder or file means, for example, as well as a rule about notation of the name (folder name and file name).

Respective names of the teaching material folder, the learning element folder, and the track element folder follow a rule that first two digits represent a number. Here, the number represented by the first two digits ranges from 01 to 99.

The file name of an audio file has first two digits representing a number, and the third digit representing the type of the file to be reproduced. Namely, the file name of each audio file includes a character string made up of at least three elements.

As understood from Table 2, multiple learning element folders in the teaching material folder have respective folder names different from each other in the number represented by the first two digits. In the case where a plurality of track element folders are stored in a learning element folder, the track element folders have respective folder names different from each other in the number represented by the first two digits. For example, in Table 2, the learning element folder having the folder name "02" includes two track element folders with respective folder names "01" and "02" different from each other in the number represented by the first two digits.

### [4. File Type]

Referring to Table 1, in the third digit of the file name of an audio file in the present embodiment, information representing the type regarding reproduction is located. Specifically, a capital alphabet letter is located.

Table 3 shows reproduction conditions represented by respective alphabet letters.

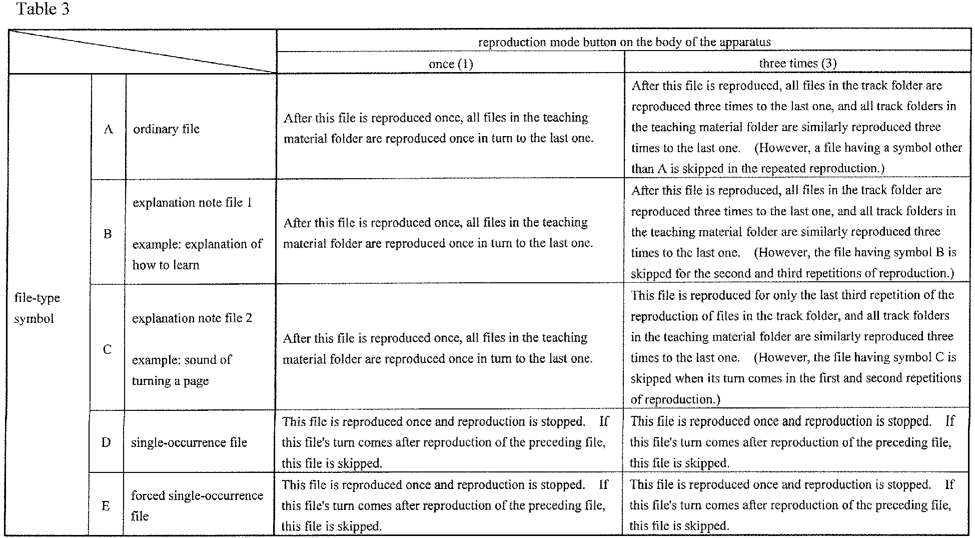

In the present embodiment, "A" to "E" are used as alphabet letters representing file types.

In the present embodiment, the file reproduction mode includes two modes, namely reproduction-once mode and reproduction-three-times mode. The reproduction-once mode is a mode in which files are reproduced once in the ascending order of the number represented by the first two digits. The reproduction-three-times mode is a mode in which files of the type in the same one track element folder are successively reproduced in the ascending order of the file name, for example, and the successive reproduction is repeated three times. A user can operate switch 66 to set the mode of reproduction apparatus 1 to the reproduction-once mode or the reproduction-three-times mode.

In Table 3, for each of symbols "A" to "E" representing file types, a reproduction pattern for each file type is indicated for each of the reproduction-once mode and the reproduction-three-times mode.

File type "A" represents an ordinary file. Namely, regarding the teaching material content of the present embodiment, file type "A" represents a component such as each sentence in a conversation. Files of file type "A" are reproduced in the reproduction-once mode in the following way. Files of this file type in the same track element folder are reproduced once in the ascending order of the number represented by the first two digits of the file name. In contrast, files of file type "A" are reproduced in the reproduction-three-times mode in the following way. The files of file type "A" in the same track folder are reproduced in the ascending order of the number represented by the first two digits of the file name, and they are reproduced three times in the ascending order from the first one to the last one.

A file of file type "B" is hereinafter referred to as "explanation note file 1 " as required, and may be an audio content which explains how to learn and is associated for example with each page of the teaching material. The file of file type "B" is reproduced in the reproduction-once mode in the following way. A specified file of file type "B" is reproduced once, and thereafter all ordinary files which are audio files of file type "A" in the teaching material folder are reproduced in the ascending order of the first two digits of the file name.

A file of file type "C" is hereinafter referred to as "explanation note file 2" as required. The file of this type may for example be an audio file of sound effects for a sound of turning a page of a text. The file of file type "C" is reproduced in the reproduction-once mode in the following way. The file of file type "C" is reproduced once, and thereafter all ordinary files in the same teaching material folder are reproduced once in turn in the ascending order of the number represented by the first two digits of the file name. In the reproduction-three-times mode, the reproduction is successively performed three times in the ascending order for all of the aforementioned "ordinary files" in the same track folder as the track folder in which the file of file type "C" is stored and, when the third reproduction is completed, the file of file type "C" is reproduced.

A file of file type "D" is hereinafter also referred to as "single-occurrence file" as required. This file may be an audio file irrelevant in meaning to other audio files, such as an audio file of a message corresponding to "call." In the reproduction-once mode, at the time the file of file type "D" is reproduced once, the operation of successively reproducing files is stopped. It should be noted that the present embodiment basically specifies files to be reproduced in the ascending order of the number represented by the first two digits of the audio file. However, while the file of file type "D" is reproduced when being directly specified by image reading unit 70 for example, reproduction of this file is skipped when this file's turn comes during reproduction.

As for the reproduction-three-times mode, in the case where this file is directly specified to be reproduced as described above, files are successively reproduced three times, and thereafter the operation of successively reproducing the files is stopped. However, in the case where the turn of the file of file type "D" comes while a plurality of files are successively reproduced in the ascending order of the number represented by the first two digits of the file name, reproduction of the file of file type "D" is skipped.

A file of file type "E" is an audio file corresponding to a message reproduced only once for each track, and is hereinafter referred to as "forced single-occurrence file." The audio file of file type "E" in the reproduction-once mode is reproduced once when being directly specified to be reproduced, and the reproduction is temporarily stopped. However, in the case where the turn of the file of file type "E" comes while audio files are successively reproduced based on the file names as described above, the reproduction of this file is skipped. In the reproduction-three-times mode, in the case where the audio file of file type "E" is directly specified to be reproduced, this audio file is reproduced once and the reproduction is stopped. However, when this file's turn comes in the ascending order of the file name, reproduction of this file is skipped.

### [5. Reproduction-Once Process]

Reproduction of files in the reproduction-once mode of reproduction apparatus 1 is specifically described.

Here, reproduction of eight audio files stored in a track element folder as shown in the following Table 4 is described. Here, respective file names of the eight audio files are "01B", "02A", "03A", "04A", "05A", "06C", "07D", and "08E". The file names "02A", "03A", "04A", and "05A" are of audio files corresponding to four bodies (body 1 to body 4) of a page of a text. File name "01B" is of an audio file for explaining how to listen to bodies 1 to 4. File name "06C" is of an audio file corresponding to an ending summary of bodies 1 to 4. The audio file of file name "07D" is an audio file of a message (sentence without subsequent sentence) irrelevant in meaning to other audio files, such as cheer. The audio file of file name "08E" is an audio file of a sound which is reproduced once at the end of learning of the page of the text, such as a sound of turning a page.

**Table 4**

| teaching material folder | learning element folder | track element folder | audio file name | explanation of file |
|---|---|---|---|---|
| 1 | 1 | 1 | 01B | explanation of how to listen |
| | | | 02A | body 1 |
| | | | 03A | body 2 |
| | | | 04A | body 3 |
| | | | 05A | body 4 |
| | | | 06C | ending summary |
| | | | 07D | sentence without subsequent sentence |
| | | | 08E | sentence reproduced only once |

As shown by image 901 on page 900 of Fig. 2, an image corresponding to a sound to be reproduced first on the text page is captured by reproduction apparatus 1 by directing image reading unit 70 so that the image reading unit faces the image. Then, image processing unit 14 processes the image captured from image reading unit 70 to specify a file corresponding to the image.

As the file is specified, acquiring unit 11 obtains data of this file from file storage unit 43 or removable medium 100. Then, acquiring unit 11 transmits the obtained data of the file to audio decoding unit 51. Accordingly, a sound corresponding to the data of the file is output from speaker 50.

In the present embodiment, when the image as described above is captured by image reading unit 70, image processing unit 14 obtains file name "01B" as a corresponding file name. Thus, acquiring unit 11 obtains data of file name "01B" and transmits it to audio decoding unit 51. Accordingly, a sound of file "01B" is output from speaker 50.

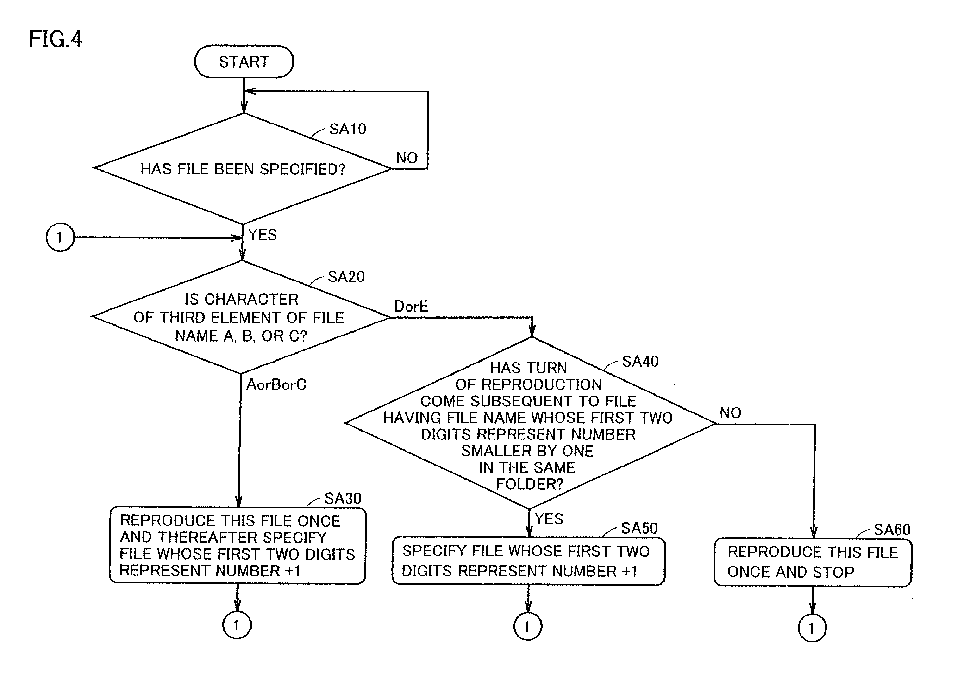

In the following, a process performed when audio files are reproduced in the reproduction-once mode (reproduction-once process) will be described with reference to Fig. 4 showing a flowchart for this process.

Referring to Fig. 4, in the reproduction-once-process, CPU 10 first determines in step SA10 whether or not a file to be reproduced has been specified. When CPU 10 determines that the file has been specified, CPU 10 causes the process to proceed to step SA20. Here, the file to be reproduced is specified, for example, in the case where an image captured by image reading unit 70 is an image corresponding to information which specifies a file to be reproduced.

In step SA20, CPU 10 determines whether the character of the third element (file identification symbol) of the file name of the specified file is A, B, or C. When CPU 10 determines that it is A, B, or C, CPU 10 causes the process to proceed to step SA30. Otherwise (D or E), CPU 10 causes the process to proceed to step SA40.

In step SA30, CPU 10 causes the specified file to be reproduced once and specifies a file to be reproduced next that has its file name whose first two digits represent the number obtained by adding one to that of the currently specified file. CPU 10 then causes the process to proceed to step SA20.

Regarding the example shown in Table 4, in the case for example where the file of file name "01B" is specified first and the file is reproduced in step SA30, the file to be specified next is the file having first two digits representing "02" which is determined by adding one to "01", namely the file of file name "02A" in Table 4.

In addition, in the case where file name "02A" is thus specified, the file specified next in step SA30 is the file having first two digits representing the number "03" determined by adding 1 to "02", namely the file of file name "03A" in Table 4.

In step SA40, CPU 10 determines whether or not the turn of reproduction of the currently specified file is subsequent to the file whose first two digits represent the number smaller by one than the currently specified file to be reproduced, in the same track element folder as the currently specified file. When the answer is YES, CPU 10 causes the process to proceed to step SA50. Otherwise, CPU 10 causes the process to proceed to step SA60. "Turn of reproduction" is herein the turn of the file specified to be reproduced.

In the case where the file of file name "05A" is reproduced in step SA30, the file to be subsequently specified to be reproduced is the file having the file name whose first two digits represent the number determined by adding one, namely file "06C". In the case where the file of file name "06C" is reproduced in step SA30, the file subsequently specified to be reproduced is file "07D". As file "07D" is specified, the process is caused to proceed to step SA50 after step SA40.

In contrast, in the case where file name "07D" is specified to be reproduced in step SA10, namely information that specifies "07D" is input through image reading unit 70, the process is caused to proceed to step SA60, since the turn of reproduction of file name "07D" is not subsequent to file name "06C".

In step SA50, CPU 10 does not reproduce the file currently specified to be reproduced, but specifies the file having the file name whose first two digits represent the number determined by adding one to that of the file currently specified to be reproduced, and returns the process to step SA20. If the process is caused to proceed to step SA50 and the file of file name "07D" is specified to be reproduced, "08E" is specified as a new file to be reproduced.

In step SA60, CPU 10 reproduces once the file currently specified to be reproduced, and ends the reproduction-once process.

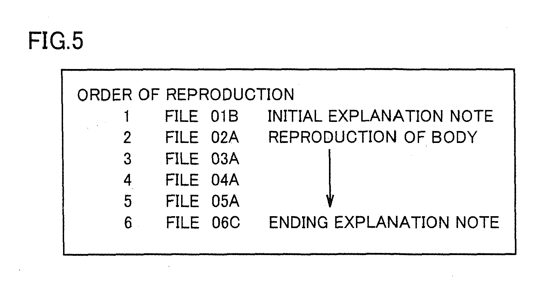

The above-described reproduction-once process reproduces, in the order shown in Fig. 5, the audio files stored in the track element folder shown in Table 4. Namely, the files are reproduced in the order of file names "01B", "02A", "03A", "04A", "05A", and "06C". It should be noted that the files of file names "07D" and "08E" are not reproduced in the successive reproduction process like the reproduction-once process but only reproduced by being directly specified to be reproduced.

### [6. Reproduction-Three-Times Process]

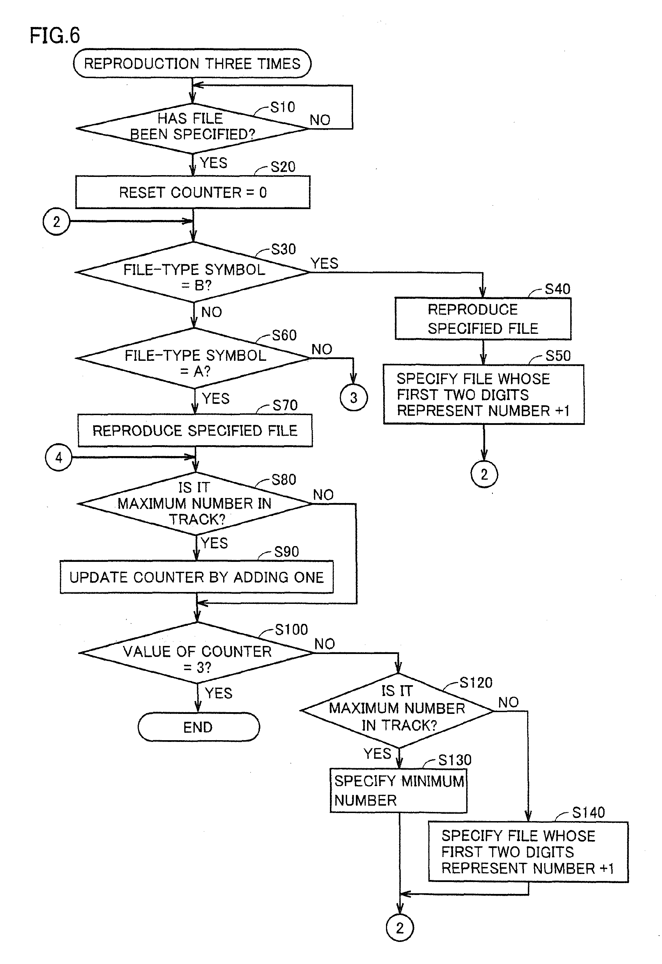

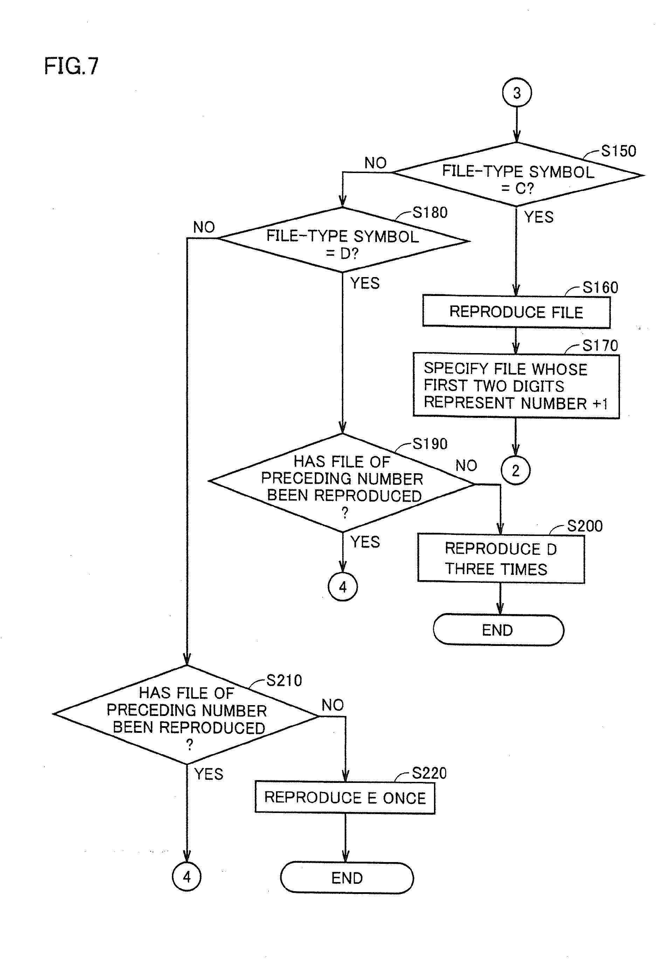

Next, a description is given of a process of repeatedly reproducing three times all or a part of files in a track element folder (reproduction-three-times process), with reference to Figs. 6 and 7 showing a flowchart for this process.

First, in step S 10, CPU 10 determines whether or not information which specifies a file to be reproduced has been input to reproduction apparatus 1 and, when CPU 10 determines that the information has been input, CPU 10 causes the process to proceed to step S20.

In step S20, CPU 10 resets a counter which is used for this reproduction-three-times process and causes the process to proceed to step S30.

In step S30, CPU 10 determines whether or not a file currently specified to be reproduced has the file-type symbol B. If so, CPU 10 causes the process to proceed to step S40. Otherwise, CPU 10 causes the process to proceed to step S60.

It should be noted that whether file-type symbol is B or not is determined depending on whether the third element of the file name of the file currently specified to be reproduced is B or not.

In step S40, CPU 10 causes the file, which is currently specified to be reproduced, to be reproduced, and causes the process to proceed to step S50. It should be noted that, in step S40, CPU 10 causes, in the case where the counter has a count value of 0, the process to proceed to step S150 after the file is reproduced. Otherwise, reproduction of the file is skipped and the process is caused to proceed to step S50.

In step S50, CPU 10 newly specifies a file to be reproduced that has a file name whose first two digits represent the number determined by adding one to that of the file which is currently specified to be reproduced, and returns the process to step S30.

In step S60, CPU 10 determines whether or not the file which is currently specified to be reproduced has file-type symbol A. If so, CPU 10 causes the process to proceed to step S70. Otherwise, CPU 10 causes the process to proceed to step S150.

In step S70, CPU 10 reproduces the file which has been specified to be reproduced, and causes the process to proceed to step S80.

In step S80, CPU 10 determines whether or not the currently specified file has the first two digits representing the maximum number among those of file-type A in the track element folder which includes the file currently specified to be reproduced. If so, CPU 10 causes the process to proceed to step S90. Otherwise, CPU 10 causes the process to proceed to step S100.

In step S90, the count value of the counter is updated by being incremented by one, and CPU 10 causes the process to proceed to step S100.

In step S100, CPU 10 determines whether or not the count value of the counter has become 3 and, when CPU 10 determines that the count value has become 3, CPU 10 ends the reproduction-three-times process.

In step S120, CPU 10 determines, in a similar manner to step S80, whether or not the file currently specified to be reproduced has its file name with the first two digits representing the maximum number among those in the track element folder which includes the file currently specified to be reproduced. If so, CPU 10 causes the process to proceed to step S130. Otherwise, CPU 10 causes the process to proceed to step S140.

In step S 130, CPU 10 specifies, as a file to be reproduced next, namely as a file to be newly reproduced, a file that has its file name with the first two digits representing the minimum number among those in the current track element folder, and returns the process to step S30.

In step S 140, CPU 10 specifies a file to be reproduced next, in a similar manner to step S 110, namely a file to be newly reproduced that has a file name whose first two digits represent the number determined by adding one, and returns the process to step S30.

Referring to Fig. 7, when CPU 10 has determined in step S60 that the file to be reproduced has its file name whose file-type symbol is not A, CPU 10 determines in step S150 whether or not the file-type symbol of this file is C. If so, CPU 10 causes the process to proceed to step S160. Otherwise, CPU 10 causes the process to proceed to step S 180.

In step S160, CPU 10 reproduces the file specified to be reproduced, and causes the process to proceed to step S 170. It should be noted that, in step S160, CPU 10 causes the process to proceed to step S 170 after the file is reproduced, in the case where the count value of the counter is 2. Otherwise, the reproduction of the file is skipped and the process is caused to proceed to step S 170.

In step S 170, CPU 10 specifies, as a file to be newly reproduced, a file having a file name whose first two digits represent the number determined by adding one, and returns the process to step S30.

In step S 180, CPU 10 determines whether or not the file currently specified to be reproduced has file-type symbol D. If so, CPU 10 causes the process to proceed to step 190. Otherwise, CPU 10 causes the process to proceed to step S210.

In step S 190, CPU 10 determines whether or not the file which has been reproduced immediately before has the first two digits representing the number which is smaller by one than that of the current file to be processed. If so, CPU 10 returns the process to step S80. Otherwise, CPU 10 causes the process to proceed to step S200.

In step S200, CPU 10 successively reproduces three times, the file specified to be reproduced (file with file-type symbol D), and ends the reproduction-three-times process.

In step S210, CPU 10 determines, in a similar manner to step S 190, whether or not the file having been reproduced immediately before has the first two digits representing the number smaller by one than that of the file currently specified to be processed. If so, CPU 10 returns the process to step S80. Otherwise, CPU 10 causes the process to proceed to step S220.

In step S220, CPU 10 reproduces once, the file currently specified to be reproduced (file with file-type symbol E), and ends the reproduction-three-times process.

In the foregoing reproduction-three-times process, image acquiring unit 70 is directed to face the image on the text that is associated with file name "01B", and accordingly the image is captured by reproduction apparatus 1. Then, in step S 10, as file name "01B" has been specified to be reproduced, the process is caused to proceed to step S20. The counter is then reset and the process is caused to proceed to step S30. Since the currently specified file has file-type symbol B, the process is caused to proceed to step S40.

In step S40, the file of file name "01B" is reproduced, and the process is caused to proceed to step S50. Thus, Order of Reproduction 1 in Table 8 is file name "01B".

In step S50, the file name whose first two digits represent the number determined by adding one, namely file name "02A", is specified to be reproduced, and the process is returned to step S30. Since the file to be reproduced next has file-type symbol A, the process is caused to proceed from step S30 through step S60 to step S70.

In step S70, the specified file is reproduced and the process is caused to proceed to step S80.

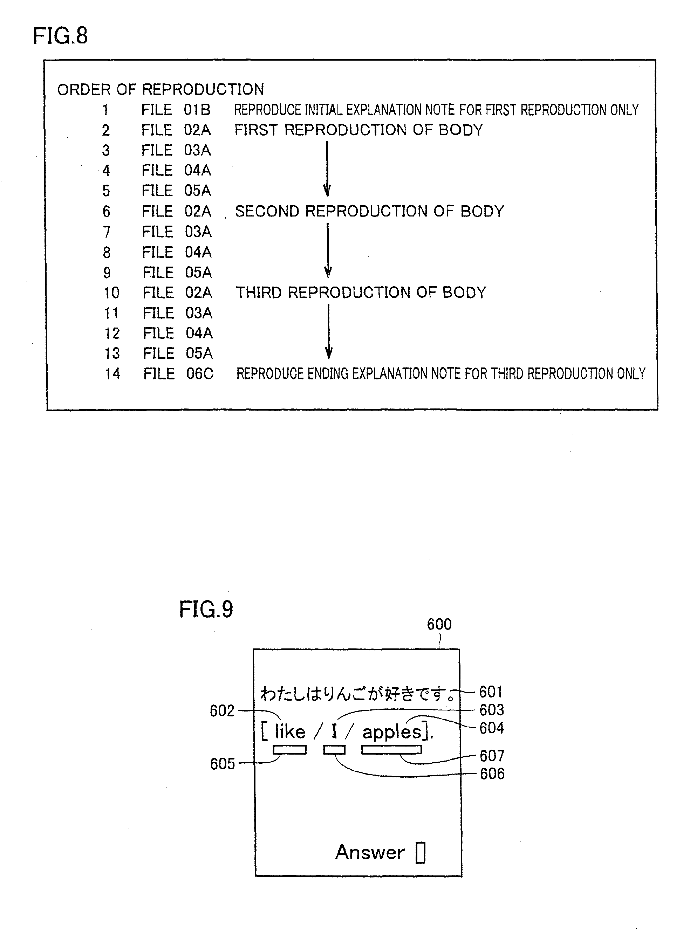

Thus, Order of Reproduction 2 in Fig. 8 is file name "02A".

Then, until the file having the maximum number (the number represented by the first two digits) in the track element folder is specified to be reproduced, a file having the first two digits representing the number determined by adding one is specified to be newly reproduced in step S110. In this way, as indicated by Order of Reproduction 3, 4, and 5 in Fig. 8, file names "03A", "04A", and "05A" are successively reproduced in turn.

In the example shown in Table 4, it is "05A" that has the maximum number represented by the first two digits. Thus, upon reproduction of file name "05A", the counter is updated by being incremented by one (step S90). Then, among the files of file-type symbol A, the file whose first two digits represent the minimum number is specified to be newly reproduced. Accordingly, after reproduction of "05A" in Order of Reproduction 5, "02A" is reproduced in Order of Reproduction 6. Thus, files "02A" to "05A" are repeatedly reproduced three times. When it is determined that the third reproduction of these files has been completed (YES in step S100), the file having the file name whose first two digits represent the number determined by adding one, namely "06C", is specified to be newly reproduced.

Then, the process is returned to step S30.

Since the file newly specified to be reproduced has file-type symbol C, the process is caused to proceed through steps S30, S60, and S150 to step S160.

In step S160, the file specified to be reproduced is reproduced. Accordingly, in Order of Reproduction 14 in Fig. 8, "06C" is reproduced. The number represented by the first two digits of the file name is updated by being incremented by one and, based on this, the file to be newly reproduced is specified.

In this way, "07D" is specified to be newly reproduced.

Then, the process is returned to step S30.

Since the file newly specified to be reproduced has file-type symbol D, the process is caused to proceed to step S190 through steps S30, S60, S150, and S180.

Since "06C" has been reproduced in step S160 immediately before "07D" is specified in step S 170, the determination in step S 190 is YES and the reproduction-three-times process is ended as it is. Namely, in the reproduction-three-times process described above with reference to Figs. 6 and 7, "01B" is reproduced first and then "02A" to "05A" are repeatedly reproduced three times. Finally, "06C" is reproduced and the reproduction-three-times process comes to an end.

It should be noted that if the file ("07D") having the file identification symbol D is initially directly specified to be reproduced, the determination is NO in step S 190, "07D" is successively reproduced three times, and the reproduction-three-times process comes to an end (step S200).

If the file ("08E") having the file identification symbol E is initially directly specified to be reproduced, the result of the determination in step S210 is NO, the file ("08E") is reproduced once in step S220 (step S220), and the reproduction-three-times process comes to an end.

### [7. Reproduction in Order]

On the condition that a plurality of audio files have been specified exactly in a predetermined order as files to be reproduced, reproduction apparatus 1 can reproduce the specific files. The displayed contents of a text adapted to the reproduction in this manner are schematically shown in Fig. 9.

On page 600 of the text, an exercise sentence 601 as well as words 602, 603, and 604 constituting an English sentence corresponding to this exercise sentence 601 are displayed. Words 602, 603, and 604 include respective images 605, 606, and 607 to be faced by image reading unit 70 for specifying these images each.

"01F_d_001" is an audio file corresponding to image 606 and word 603 for pronouncing word 603. "02N_d_002" is an audio file corresponding to image 605 and word 602 for pronouncing word 602. "03N_d_003" is an audio file corresponding to image 607 and word 604 for pronouncing word 604. As image 607 is captured by image processing unit 15 through image reading unit 70, acquiring unit 11 acquires the information that "03N_d_003" has been specified to be reproduced.

A description will be given by way of example of the case where five files "01F_d_001", "02N_d_002", "03N_d_003", "04E_d_004", and "05U_d_005" are stored in a certain track element folder as shown in Table 5.

**Table 5**

| learning element folder | track element folder | content file No. | content |
|---|---|---|---|
| 01_d_001 | 01_t101 | 01F_d_001 | I |
| | | 02N d 002 | like |
| | | 03N_d_003 | apples |
| | | 04E d 004 | sound of chime |
| | | 05U_d_005 | sound of buzzer |

In this case, if the files are specified to be reproduced in the correct order "01F_d_001", "02N_d_002", and "03N_d_003", the file "04E_d_004", by which a sound is output for informing a user of the fact that reproduction in this order is correct, is specified as a file to be reproduced subsequently to "03N_d_003". Specifically, acquiring unit 11 determines, based on the result of processing by image processing unit 15 of the image information which has been input from image reading unit 70, whether or not the order in which the files specified to be reproduced are input is the predetermined order. When it is determined that it is the predetermined order, "04E_d_004" is specified as a file to be reproduced subsequently to "03N_d_003" which is the last file in this order.

In contrast, if the order in which files are specified to be reproduced that is obtained by acquiring unit 11 is different from the predetermined order, namely if "01F_d_001" is specified and thereafter "03N_d_003" is specified which should correctly be "02N_d_002", for example, specifying unit 13 informs the user of the fact that the user has incorrectly specified the order in which the files are to be reproduced. Specifically, "05U_d_005" is specified to be reproduced subsequently to "03N_d_003". [8. Group Reproduction]

Reproduction apparatus 1 can determine files to be reproduced, in response to user's specification of files to be reproduced, depending on whether the user has specified all files belonging to a correct group without specifying files belonging to an incorrect group, among a plurality of files stored in a track element folder.

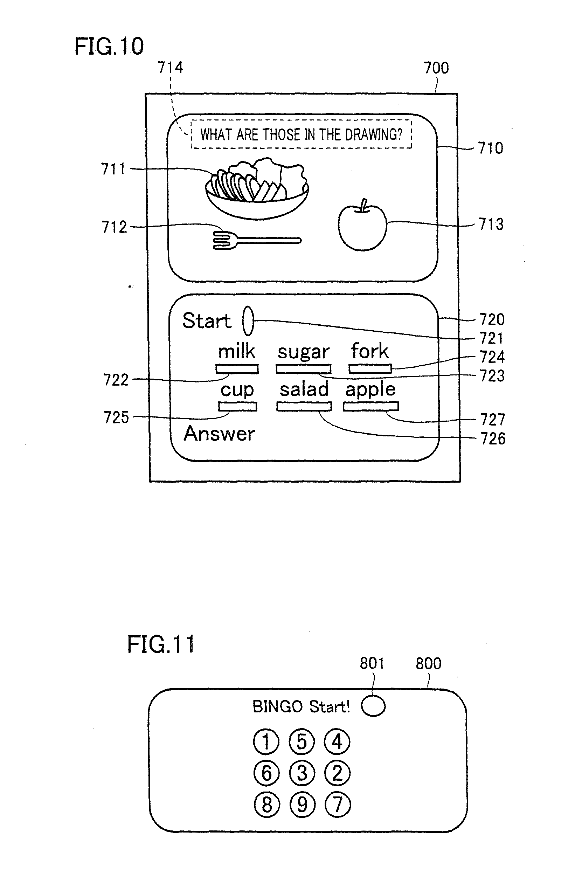

Fig. 10 shows the displayed contents of a text of a specific example to which the above-described manner of reproducing files is applied.

Page 700 of Fig. 10 includes a question display area 710 and an answer input area 720. Question display area 710 includes an illustration 711 of salad, an illustration 712 of fork, and an illustration 713 of apple. Answer input area 720 includes an image 721 for outputting a sound informing that an action of answering is started.

A user can have image reading unit 70 read an image which is included in answer input area 720 for reproducing a correct audio file, so as to answer the question.

In answer input area 720, an image 722 specifying "milk", an image 723 specifying "sugar", an image 724 specifying "fork", an image 725 specifying "cup", an image 726 specifying "salad", and an image 727 specifying "apple" are displayed.

Respective contents of files stored in a track element folder for this example are shown in Table 6.

**Table 6**

| learning element folder | track element folder | content file No. | content |
|---|---|---|---|
| 01_d_001 | 01_t101 | 01G_d_001 | fork |
| | | 02G_d_002 | salad |
| | | 03G_d_003 | apple |
| | | 04B_d_004 | start! |
| | | 05E_d_005 | sound of chime |
| | | 06U_d_006 | sound of buzzer |
| | | 07U d_007 | sugar |
| | | 08U d 008 | cup |
| | | 09U_d_009 | milk |

In this track element folder "01_t101", nine files "01G_d_001" "02G_d_002", "03G_d_003", "04B_d_004", "05E_d_005", "06U_d_006", "07U_d_007", "08U_d_008", and "09U_d_009" are stored as audio files (content files). As image 721 is captured through image reading unit 70 by image processing unit 15, "04B_d_004" is reproduced. Likewise, as images 722, 723, 724, 725, 726, and 727 are captured through image reading unit 70 by image processing unit 15, respective files "09U_d_009", "07U_d_007", "01G_d_001", "08U_d_008", "02G_d_002", and "03G_d_003" are reproduced.

Among the files shown in Table 6, the files whose first two digits represent a value smaller than that of "04B_d_004" belong to a correct-answer group, and the files whose first two digits represent a value larger than that of "06U_d_006" belong to an incorrect-answer group.

Thus, the correct-answer group and the wrong-answer group are distinguished from each other by the range of the value represented by the first two digits. Therefore, when both the condition that all of the files whose first two digits represent a value smaller than 04 are selected to be reproduced and the condition that none of the files whose first two digits represent a value larger than 06 is selected are satisfied, acquiring unit 11 specifies audio file "05E_d_004" used for indicating that the answer is correct is specified to be reproduced after all of "01G_d_001", "02G_d_002", and "03G_d_003" are specified.

### [9. Random Reproduction]

Fig. 11 shows the contents of a text for random reproduction. Page 800 of the text includes an image 801 used to start reproducing a sound.

Page 800 also indicates numbers corresponding to "1" to "9". Table 7 shows respective contents of files corresponding to page 800 and stored in a track element folder.

**Table 7**

| learning element folder | track element folder | content file No. | content |
|---|---|---|---|
| 01_d_001 | 01_t101 | 01D_d_001 | Listen to the English and point to the corresponding picture. |
| | | 02X_d_002 | one |
| | | 03X d 003 | two |
| | | 04X d 004 | three |
| | | 05X_d_005 | four |
| | | 06X d 006 | five |
| | | 07X d 007 | six |
| | | 08X d 008 | seven |
| | | 09X d 009 | eight |
| | | 10X_d_010 | nine |

In this track element folder "01_t101", a file "01D_d_001" corresponding to image 801, as well as nine files "02X_d_002", "03X_d_003", "04X_d_004", "05X_d_005", "06X_d_006", "07X_d_007", "08X_d_008", "09X_d_009", and "10X_d_010" corresponding to "1" to "9" respectively are stored. The file "01D_d_001" is used to output a sound of a message "Listen to the English and point to the corresponding picture". The files "02X_d_002", "03X_d_003", "04X_d_004", "05X_d_005", "06X_d_006", "07X_d_007", "08X_d_008", "09X_d_009", and "10X_d_010" are used to output respective sounds of the English pronunciation of numbers "1" to "9".

As a user directs image reading unit 70 so that it faces image 801, image 801 is captured by image processing unit 15. Accordingly, the information specifying reproduction of "01D_d_001" is acquired by the acquiring unit, and the data of "01D_d_001" from file storage unit 43 is transmitted to audio decoding unit 51. Thus, the sound of "01D_d_001" is output from speaker 50. After "01D_d_001" is specified to be reproduced, specifying unit 13 randomly specifies a file to be reproducing next, from "02X_d_002", "03X_d_003", "04X_d_004", "05X_d_005", "06X_d_006", "07X_d_007", "08X_d_008", "09X_d_009", and "10X_d_010".

### [10. Modifications]

In the embodiment described above, from the file name of a file which has been specified to be reproduced and whose specification has been accepted, the identification information (the file-type symbol and/or the number represented by the first two digits of the audio file) is detected. Based on the detected identification information, it is determined whether or not the file name of the file whose specification has been accepted satisfies a specific condition. Based on this determination, a file to be reproduced subsequently to the specified file is specified. Thus, based on the file name of the file which has first been specified to be reproduced, the file to be reproduced next is determined. Accordingly, based on the file whose specification has been accepted, the file reproduction pattern can be changed in a variety of manners. A plurality of files can thus be reproduced in more various patterns without changing settings of the apparatus.

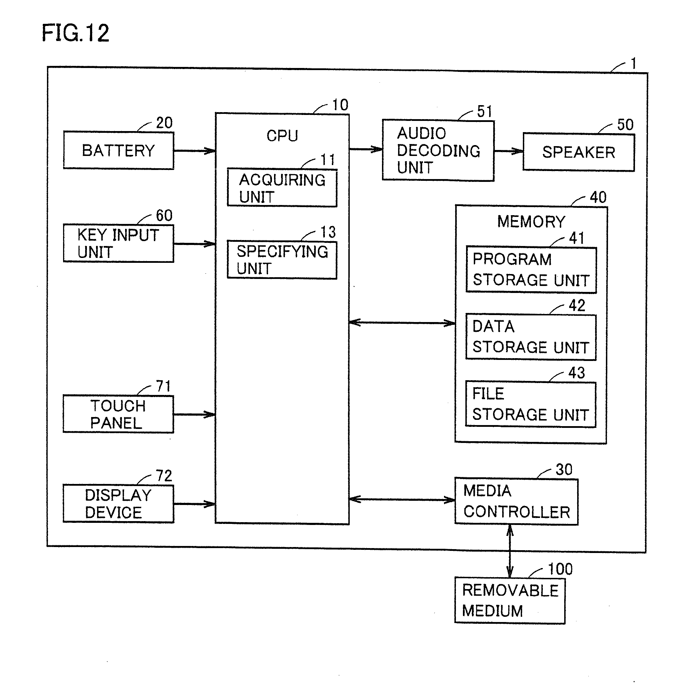

It should be noted that, in the above-described embodiment, a file is specified by reading, by means of image reading unit 70, an image printed on a textbook of paper or the like, and processing the read image by image processing unit 15, and accordingly the information which specifies the file is acquired. Here, reproduction apparatus 1 may include, instead of image reading unit 70 and image processing unit 15, a display device 72 such as liquid display device and a touch panel 71 mounted on this display device 72 as shown in Fig. 12, so that the information which is given from a user for specifying a file is obtained through touch panel 71. CPU 10 controls the manner of display by display device 72. Based on the displayed content of display device 72 at the touched position of touch panel 71, for example, CPU 10 identifies the specified file. Namely, CPU 10 identifies for example the image displayed by display device 72 at the touched position to thereby identify the specified file. In this case, touch panel 71 accepting the touching operation is used to configure the accepting unit which accepts specification of a file.

Furthermore, in the present embodiment, a file to be reproduced subsequently to the file having been specified can be specified based on the file name. Therefore, as a predetermined condition which is a criterion in making the determination about the file name, the file name of an existing audio file can be used to appropriately adjust the order in which audio files sold in the market for other uses (for listening to music) for example are to be reproduced.

Moreover, in the above-described embodiment, the present invention is applied to the case where audio files are reproduced in accordance with a text prepared for learning. The present invention is also applicable to a guide to a game machine or a guide to the route or exhibits in an art museum or public institution. In the case of the guide to exhibits in an art museum, respective audio files for explaining a plurality of exhibits for example may be stored.

According to the above-described embodiment, depending on whether or not the file name of a file whose specification has been accepted meets a predetermined condition, a file to be reproduced next is specified among a plurality of files. Thus, the file name of a file to be specified can be changed to thereby give variations of the reproduction pattern to the file to be reproduced next in the content reproduction apparatus, without particularly requiring an operation for changing settings of the apparatus.

Accordingly, in the content reproduction apparatus, variations can be given to the file reproduction pattern without requiring user's complicated setting operation.

It should be construed that embodiments disclosed herein are by way of illustration in all respects, not by way of limitation. It is intended that the scope of the present invention is defined by claims, not by the description above, and encompasses all modifications equivalent in meaning and scope to the claims. In addition, the technical ideas explained in connection with respective embodiments may singly be implemented and are also intended to be implemented in combination to the possible extent.

### REFERENCE SIGNS LIST

1 reproduction apparatus; 10 CPU; 11 acquiring unit; 13 specifying unit; 15 image processing unit; 70 image reading unit

## Claims

1. A content reproduction apparatus (1) which reproduces a plurality of files recorded on a recording medium, comprising:
an accepting unit (70) which accepts specification of a file; and
a control unit (10) which executes a process in accordance with the specification of the file accepted by said accepting unit (70), wherein
said control unit (10) detects identification information from a file name of the file whose specification is accepted by said accepting unit (70), and determines, based on said detected identification information, whether the file name of the specified file satisfies a predetermined condition and, in accordance with a result of the determination, specifies a file to be reproduced subsequently to said specified file.

2. The content reproduction apparatus (1) according to claim 1, wherein
said control unit (10) sets the number of times that files are to be repeatedly reproduced, and
said predetermined condition is that said specified file has been reproduced the set number of times.

3. The content reproduction apparatus (1) according to claim 1, wherein said predetermined condition is that a number included in the file name of said specified file is subsequent, in ascending order, to a number included in a file name of a file reproduced immediately before.

4. The content reproduction apparatus (1) according to claim 1, wherein said predetermined condition is that a character string included in the file name of said specified file is of a specific type.

5. The content reproduction apparatus (1) according to claim 1, further comprising a display unit (72), wherein said control unit (10) identifies an image displayed on said display unit (72) to identify the specified file.

6. The content reproduction apparatus (1) according to claim 1, wherein said control unit (10) randomly specifies a file to be reproduced next, from two or more files satisfying said predetermined condition.

7. The content reproduction apparatus (1) according to claim 1, wherein
said plurality of files include files of a first group and files of a second group, and
said predetermined condition is that all files of said first group are specified while the files of said second group are not specified.
